# NEUE EUROPÄISCHE PATENTSCHRIFT

(11) **EP 1 084 883 B2**
(45) Veröffentlichungstag und Bekanntmachung des Hinweises auf die Entscheidung über den Einspruch: **26.12.2007**
(45) Hinweis auf die Patenterteilung: 30.06.2004
(21) Anmeldenummer: 00118950.5
(22) Anmeldetag: 01.09.2000
(51) Int. Cl.: B60J 7/20

(54) **Cabriolet-Fahrzeug**
Convertible vehicle
Véhicule convertible

(30) Priorität: 13.09.1999 DE 29916002 U
(43) Veröffentlichungstag der Anmeldung: 21.03.2001
(73) Patentinhaber: Wilhelm Karmann GmbH, 49084 Osnabrück (DE)
(72) Erfinder: Baumeier, Andreas, 49143 Bissendorf (DE); Tiemeyer, Hartwich, 49080 Osnabrück (DE)
(74) Vertreter: Busse & Busse Patentanwälte

(56) Entgegenhaltungen:
- EP-A- 0 309 066
- EP-A- 0 505 349
- EP-A- 0 846 584
- EP-A- 0 857 598
- DE-A- 19 516 876
- DE-A- 19 516 877
- DE-A- 19 635 869
- DE-A- 19 706 418
- DE-A- 19 706 444
- DE-A- 19 756 062
- DE-A- 19 756 981
- DE-A- 19 803 155
- DE-C- 4 445 944
- DE-U- 8 913 486

## Beschreibung

Die Erfindung bezieht sich auf ein Cabriolet-Fahrzeug mit einem im rückwärtigen Fahrzeugbereich unterhalb eines Deckelteils ablegbaren Dach, wobei das Deckelteil einerseits zur Freigabe einer seinem vorderen Endbereich benachbarten Durchtrittsöffnung für das Dach und andererseits zur Freigabe einer seinem hinteren Endbereich benachbarten Aufnahmeöffnung für Gepäck auf- und zubeweglich ist, nach dem Oberbegriff des Anspruchs 1.

Die DE 197 56 062 C1 offenbart ein Cabriolet-Fahrzeug, das ein unterhalb eines Deckelteils ablegbares Dach aufweist, wobei das Deckelteil in Doppelfunktion gleichzeitig als Begrenzung eines Kofferraums dient und einerseits zur Freigabe einer Durchtrittsöffnung für das Dach und andererseits zur Freigabe einer Aufnahmeöffnung für Gepäck geöffnet werden kann. Zur Sicherung gegen ein Öffnen des Deckelteils zur Freigabe der Durchtrittsöffnung für das Dach ist ein Schloß erforderlich, das separat angesteuert werden muß und sich im vorderen Teil des Deckelteils befindet. Zudem sind seitliche Hilfsrahmen ausgebildet, die an der Karosserie gelagert sind und angesteuert werden müssen. Damit geht ein erheblicher Steuerungsaufwand einher, zudem resultiert aus dem Vorsehen solcher Schlösser eine Einschränkung des zur Verfügung stehenden Raumes.

Aus der gattungsgemäßen DE 44 45 944 C1 ist ein Cabriolet-Fahrzeug bekannt, bei dem ebenfalls das Deckelteil in Doppelfunktion gleichzeitig als Begrenzung eines Kofferraumes dient und zur Freigabe einer Durchtrittsöffnung für das Dach und andererseits zur Freigabe einer Aufnahmeöffnung für das Gepäck geöffnet werden kann. Das Deckelteil ist mit seiner Schwenkachse an einem Hilfsrahmen angelenkt und dieser ist seinerseits über eine Schwenkachse karosserieseitig am unteren Fahrzeugendbereich abgestützt. Zur Verschwenkung dieses Hilfsrahmens sind an jeder Fahrzeugseite Antriebsorgane vorgesehen, wobei ein oberes Antriebsorgan für die Freigabe des Gepäckraumes durch Verschwenkung des Deckelteiles verantwortlich ist und für die Freigabe des Deckelteiles zur Aufnahme des Daches das andere, im unteren Karosseriebereich angeordnetes weiteres Antriebsorgan sorgt. Das Vorsehen mehrerer Antriebsorgane erfordert einen erhöhten Bauaufwand. Zur Verriegelung von dort vorgesehenen Schloßelementen sind jeweils wiederum besondere Schloßelemente erforderlich, die in nicht näher dort offenbarter Weise zu entriegeln bzw. zu verriegeln sind, womit wiederum ein besonderer Bauaufwand einhergeht.

Der Erfindung liegt das Problem zugrunde, ein Cabriolet-Fahrzeug der eingangs genannten Art hinsichtlich des Steuerungsaufwandes für das Öffnen und Schließen des Deckelteils zu vereinfachen.

Dieses Problem wird erfindungsgemäß bei einem Cabriolet der eingangs genannten Art durch die Merkmale des kennzeichnenden Teils des Patentanspruchs 1 gelöst. Weitere vorteilhafte Ausgestaltungen der Erfindung sind in den Ansprüchen 2 bis 11 angegeben.

Dadurch, daß der Antrieb mit einem Verriegelungselement versehen ist, sind weitere, separat anzusteuernde Schlösser für die Sicherung des Daches in der die Durchtrittsöffnung für das Dach verschließenden Stellung entbehrlich.

Es können Hydraulikzylinder verwendet werden, in die die Verriegelung integriert ist. Die Verwendung eines solchen Antriebsorgans für das hier vorliegende Cabriolet-Fahrzeug schafft einen besonderen Kostenvorteil und eine Vereinfachung der Montage. Das Schloß stellt dann kein separates Bauteil mehr dar, damit geht eine entsprechende Gewichtsersparnis und Montageerleichterung einher.

Eine weitere Verminderung von Schloßbauteilen, die einzeln oder in Kombination mit den Merkmalen des Anspruchs 1 durchgeführt werden kann, ergibt sich durch eine mechanische Zwangsführung, die die Teile einer Mehrgelenkanordnung in einer blockierenden Stellung hält und somit ein Aufschwenken der Aufnahmeöffnung für Gepäck allein über diese Zwangsführung verhindert. Weiterer Maßnahmen, wie etwa weiterer Schlösser, bedarf es hierfür nicht. Wenn besonders vorteilhaft ein sich selbsttätig in Verriegelungsstellung bringendes Schloßteil vorgesehen ist, das die Zwangsführung der Teile gegeneinander bewirkt, bedarf es keiner separaten Ansteuerung.

Weitere Vorteile und Merkmale ergeben sich aus in der Zeichnung dargestellten Ausführungsbeispielen des Gegenstandes der Erfindung. In der Zeichnung zeigt:

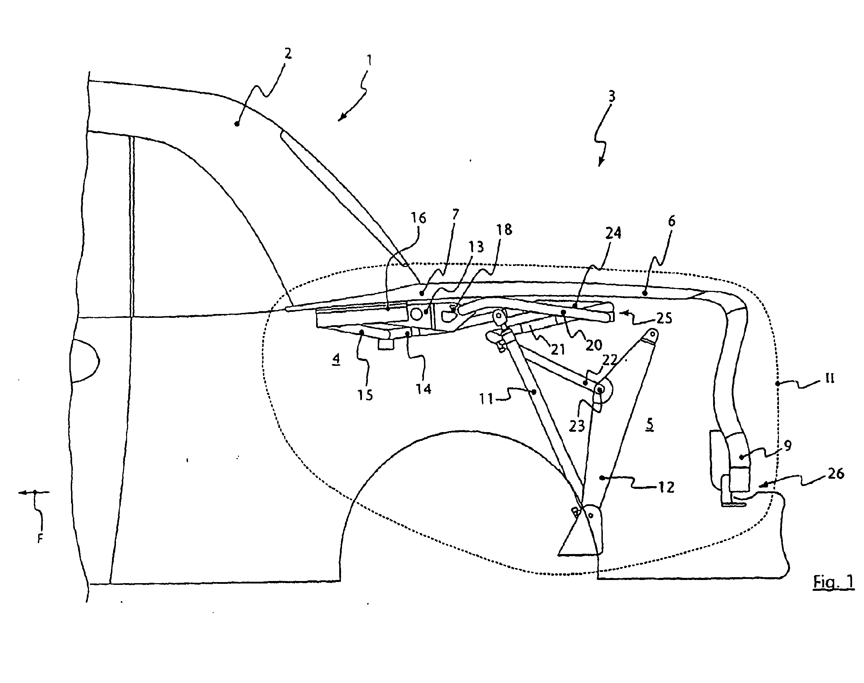

- Fig. 1: einen Heckbereich eines erfindungsgemäßen Cabriolet-Fahrzeugs in abgebrochener Darstellung mit eingezeichneten Antriebs- und Gestängeteilen für die Bewegung des Deckelteils,
- Fig. 2: das Detail II in Fig. 1,

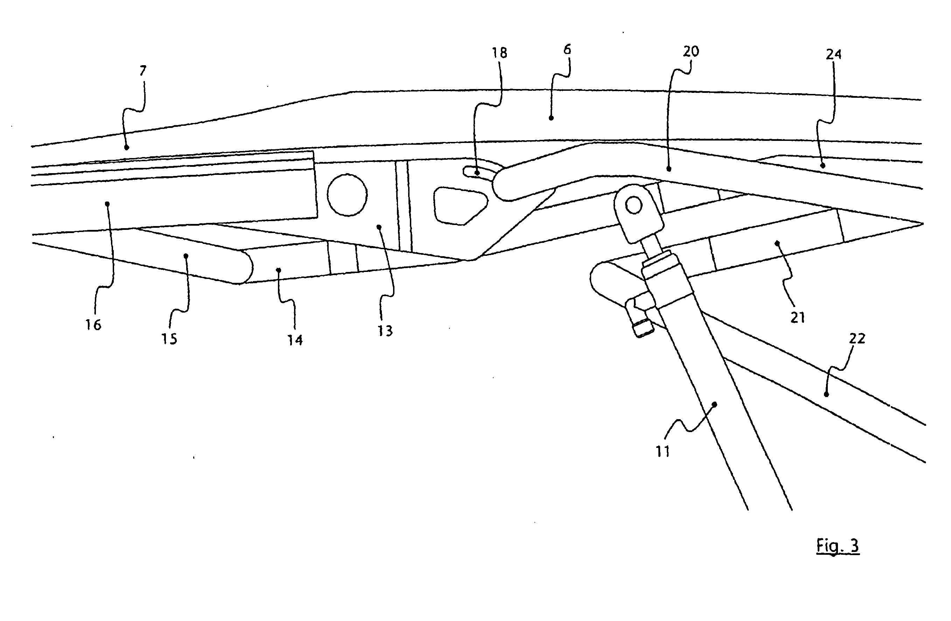

- Fig. 3: das Detail III in Fig. 2,
- Fig. 4: das Deckelteil in Freigabestellung der Durchtrittsöffnung für die Dachaufnahme,
- Fig. 5: das Deckelteil in Freigabestellung der Aufnahmeöffnung für die Gepäckaufnahme,

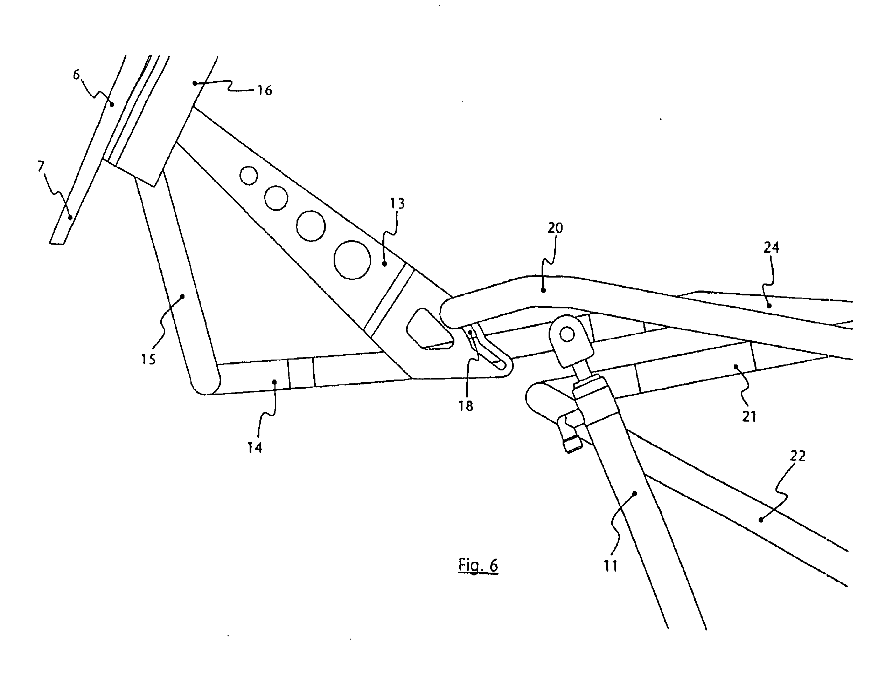

- Fig. 6: das Detail VI in Fig. 5,

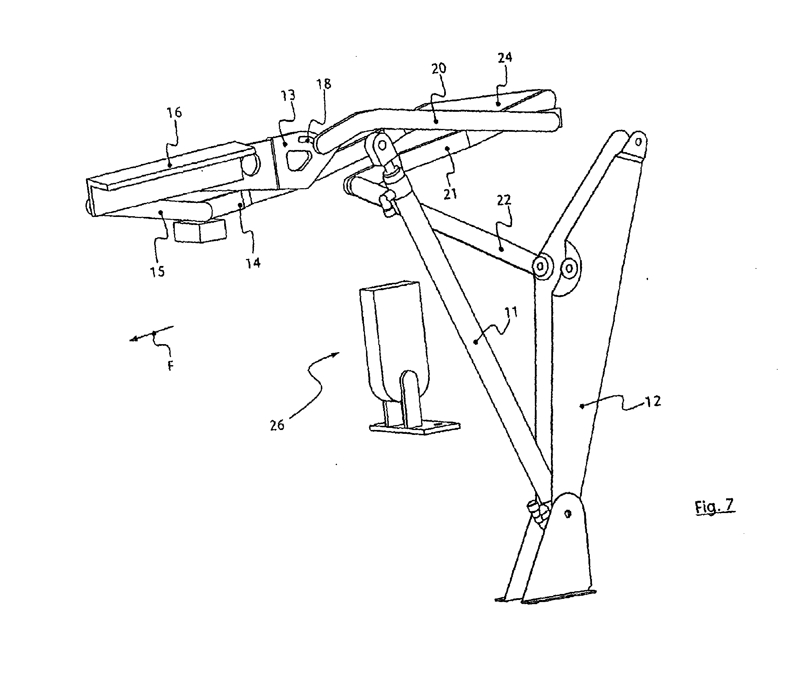

- Fig. 7: eine perspektivische Ansicht der Gestängeteile bei geschlossenem Deckelteil,

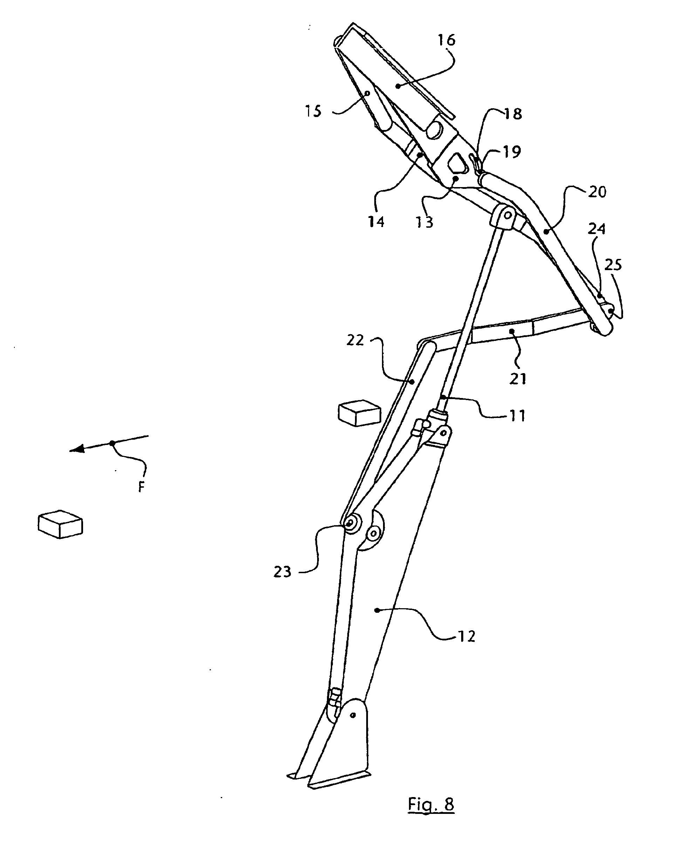

- Fig. 8: eine ähnliche Ansicht wie Fig. 7 der Teile bei Freigabe der Durchtrittsöffnung für das Dach,

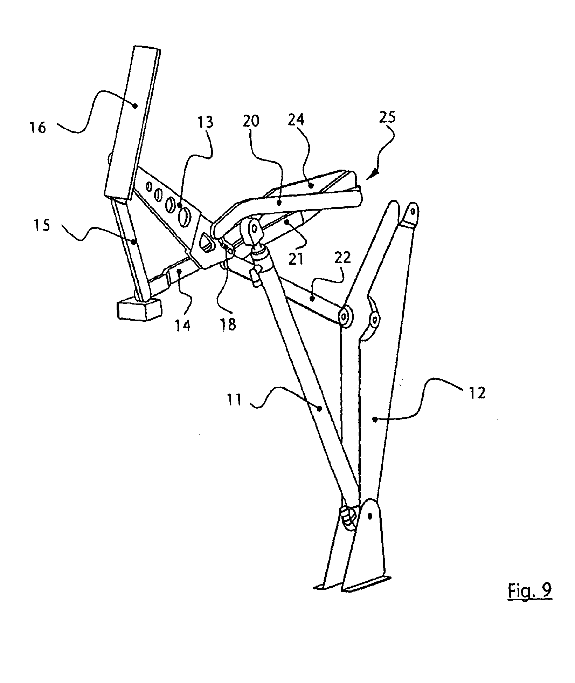

- Fig. 9: eine ähnliche Ansicht wie Fig. 8 bei Freigabe der Aufnahmeöffnung für Gepäck,
- Fig. 10: die als heckseitiges Schloß des Deckelteils ausgebildete Scharniervorrichtung in Seitenansicht,
- Fig. 11: das Scharnierschloß nach Fig. 10 in perspektivischer Einzeiteilansicht,

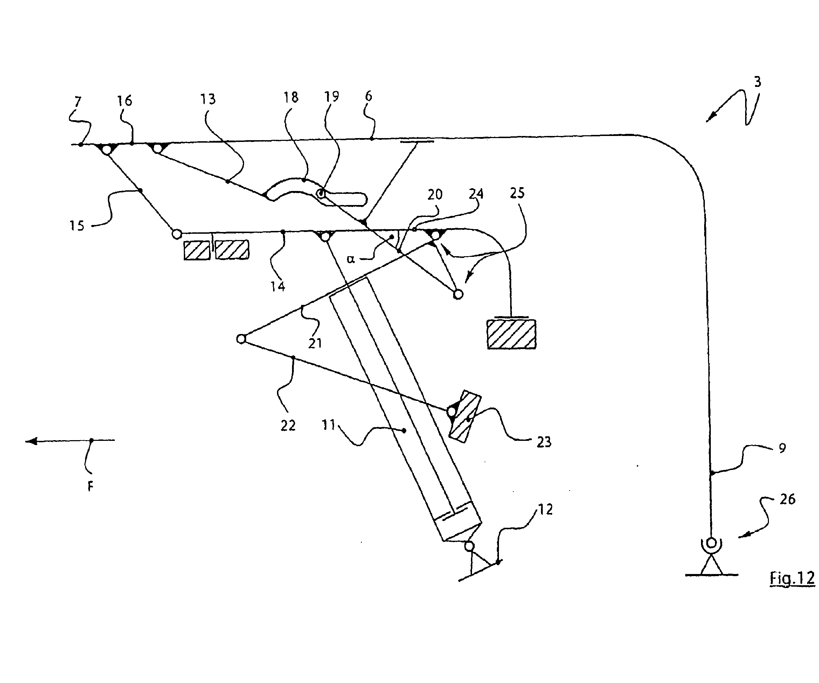

- Fig. 12: eine Funktionsskizze des Deckeiteils in Stellung nach Fig. 2,

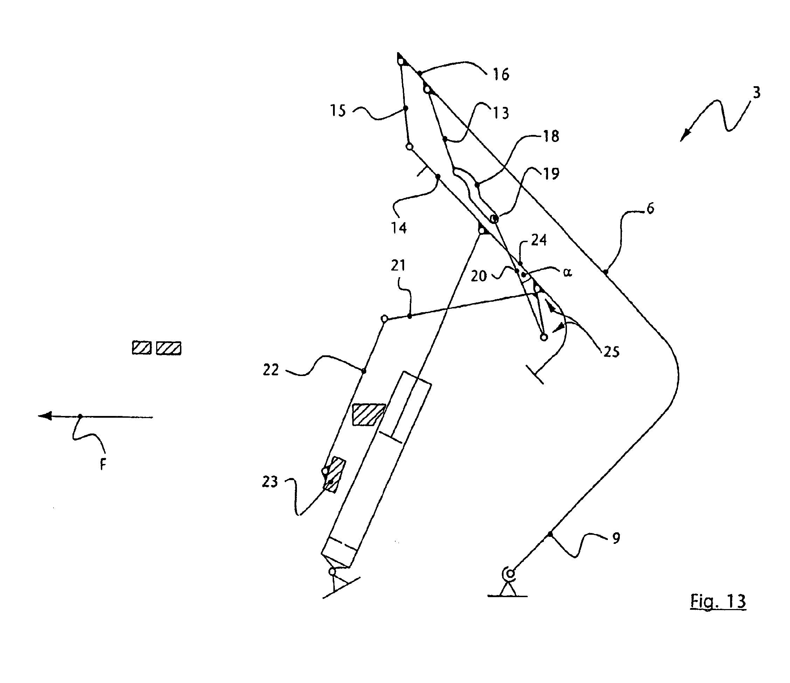

- Fig. 13: eine Funktionsskizze des Deckelteils in Stellung nach Fig. 4,

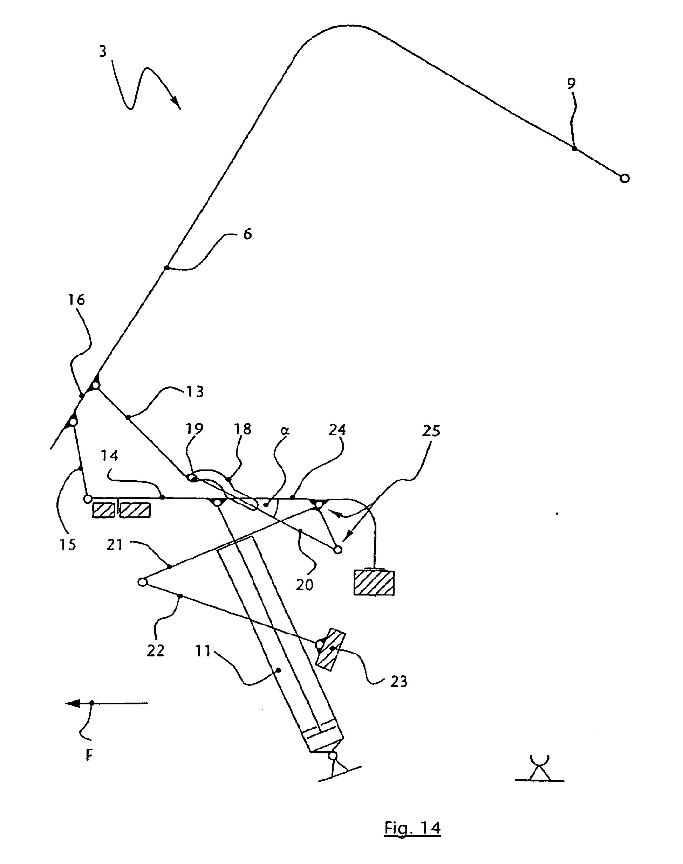

- Fig. 14: eine Funktionsskizze des Deckelteils in Stellung nach Fig. 5.

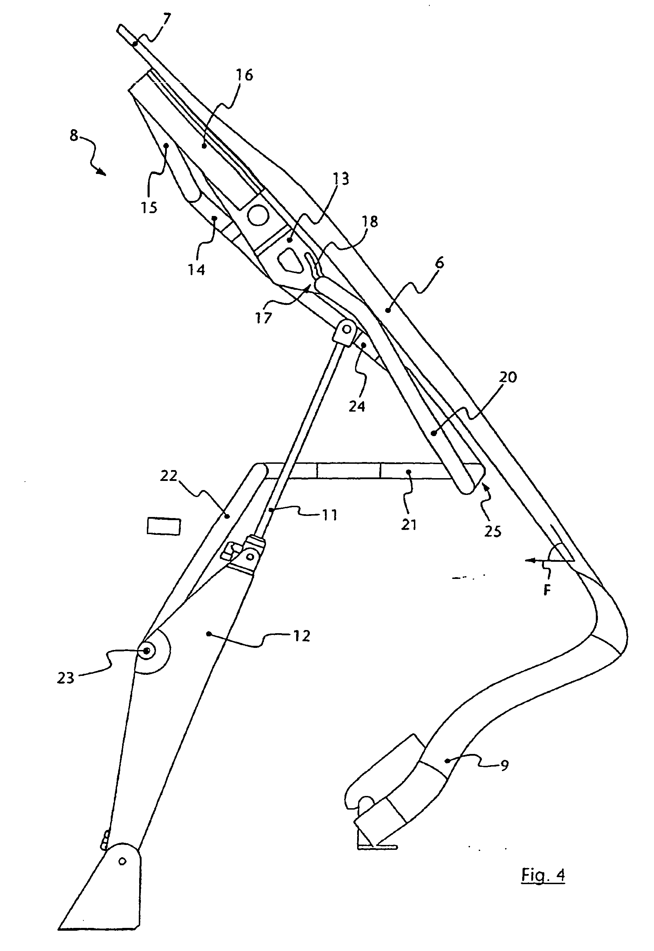

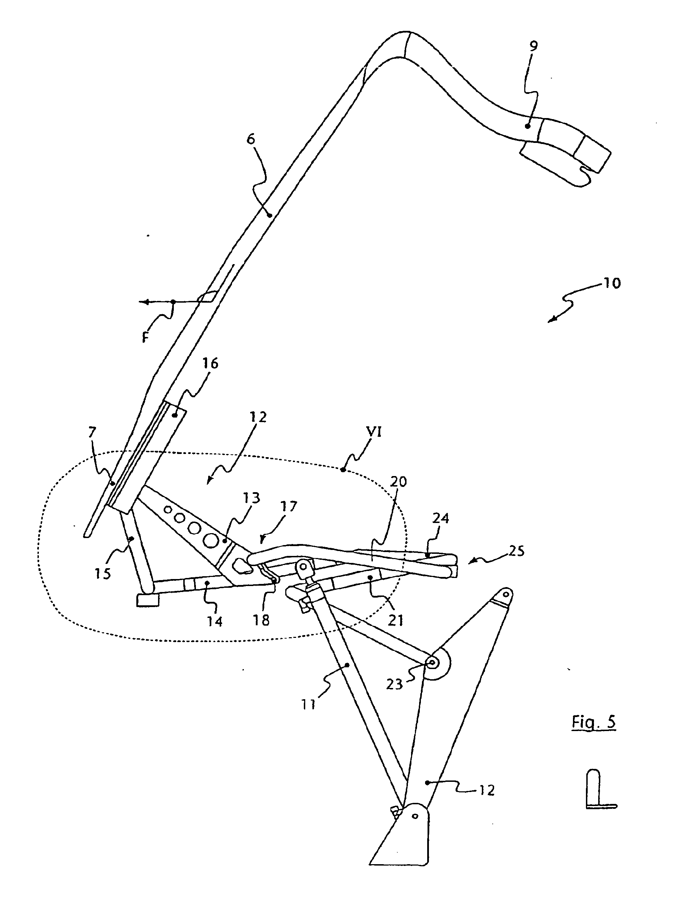

Das Cabriolet-Fahrzeug 1 weist ein Dach 2 auf, das im Fahrzeugheckbereich 3 in einen Verdeckaufnahmeraum 4 ablegbar ist. Der Verdeckaufnahmeraum 4 ist einem Gepäckaufnahmeraum 5 benachbart, und beide sind von einem Deckelteil 6 zumindest bereichsweise übergriffen. Das Deckelteil 6 kann auf zwei Arten geöffnet werden: einerseits zur Freigabe einer seinem vorderen Endbereich 7 benachbarten Durchtrittsöffnung 8 für das Dach 2 und andererseits zur Freigabe einer seinem hinteren Endbereich 9 benachbarten Aufnahmeöffnung 10 für Gepäck (Fig. 4, Fig. 5). Zumindest für das Öffnen und Schließen der Durchtrittsöffnung 8 für das Dach 2 ist ein Antrieb 11 vorgesehen, der sich an einem karosserieseitigen Lager 12 abstützt.

Um die Schließstellung des Deckelteils 6 sichern zu können, ist vorgesehen, daß der Antrieb 11, der hier als Hydraulikzylinder ausgebildet ist, mit einem Verriegelungselement versehen ist. Das Verriegelungselement ist im Ausführungsbeispiel als mechanisches, in den Hydraulikzylinder integriertes Schloß ausgebildet. Derartige Bauteile können als Fertigbauteile eingesetzt werden, ohne daß für die Montage des Verriegelungselements ein über den Aufwand zur Montage des Antriebs 11 hinausgehender Schritt notwendig wäre. Dadurch, daß das Verriegelungselement in die Antriebsteile, hier die seitlichen Hydraulikzylinder 11, integriert ist, wird auch kein weitergehender Bauraum hierfür benötigt.

Mit diesem Verriegelungselement ist das Deckelteil 6 in seiner die Durchtrittsöffnung 8 für das Dach 2 verschließenden Stellung gehalten; weitere Schloßelemente oder dergleichen, um diese Halterung sicherzustellen, sind nicht erforderlich.

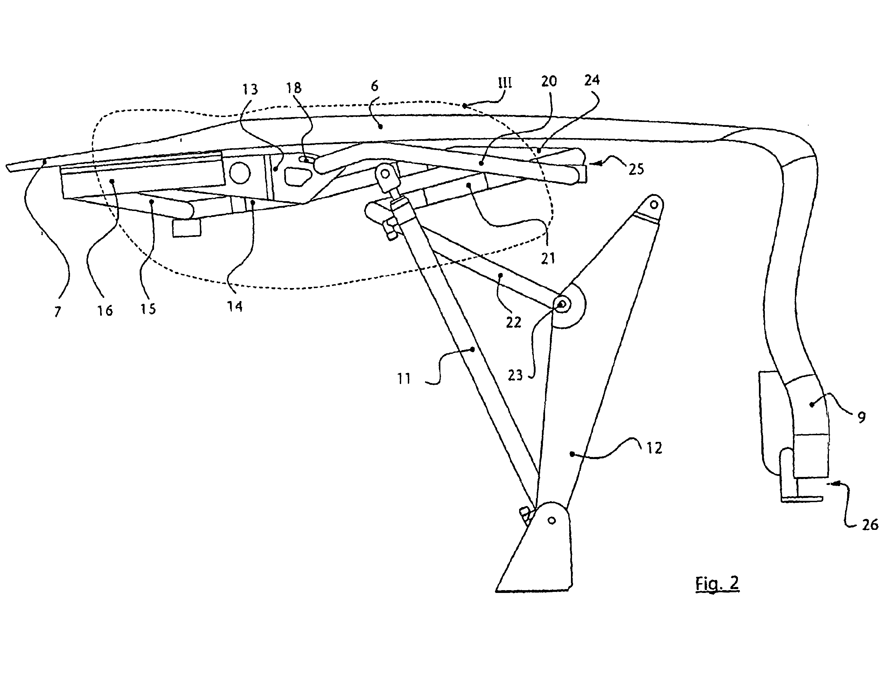

Um die umgekehrte Aufschwenkbewegung, also die Freigabe der Aufnahmeöffnung 10 für Gepäck, zu bewirken, ist eine Mehrgelenkanordnung 12 dem vorderen Endbereich 7 des Deckelteils 6 benachbart, die bei Freigabe der Aufnahmeöffnung 10 gegeneinander geöffnete Teile 13,14,15 und 16 umfaßt, wohingegen die Teile 13,14,15,16 in geschlossener Stellung des Deckelteils 6 (Fig. 2) sowie bei Freigabe der Durchtrittsöffnung 8 für das Dach 2 (Fig. 4) im wesentlichen parallel zueinander liegen.

Um eine unbeabsichtigte Lösung des Mehrgelenks 12 aus der Parallellage der Teile 13,14,15,16 in die geöffnete Stellung nach Fig. 5 zu verhindern, ist eine mechanische Zwangsführung 17 vorgesehen.

Diese ist in einem ersten Ausführungsbeispiel als Kulissenführung 18 ausgebildet, in die ein Zapfen 19, der am vorderen Ende eines Lenkers 20 festgelegt ist, eingreift. Der Lenker 20 ist dabei über weitere Lenker 21,22 mit einer karosseriefesten Anlenkung 23 verbunden, wobei die Lenker 20,21 und 22 durch Betätigung des Antriebsorgans 11 gegeneinander ausfahrbar sind. Desweiteren ist der Lenker 20 über ein Zwischengestängeteil 24 auch mit dem unteren Lenker 14 des Viergelenks 12 verbunden. Die Verbindung des Lenkers 20 zu den Teilen 24 und 21 ist an einem heckseitigen Doppelscharnier 25 ausgebildet. An dem Zwischenlenker 24 greift auch das Antriebsorgan 11 an.

Bei geschlossenem Deckelteil 6 (Fig. 2) liegen die Teile 13,14,15,16 des im Ausführungsbeispiel als Viergelenk ausgebildeten Mehrgelenks 12 nahezu parallel zueinander, der Zapfen 19 ist in der Kulisse 17 in einer Zwischenstellung gehalten, wobei die Kulisse 17 im vorderen Bereich einen gekrümmten Abschnitt im hinteren Bereich einen geradlinigen Abschnitt aufweist und in Zwischenstellung der Zapfen 19 im Übergang zwischen dem gekrümmten und dem geradlinigen Bereich der Kulisse 17 gehalten ist.

Wenn aus dieser Stellung auf das Antriebsorgan 11 eine ausfahrende Kraft ausgeübt wird, kann die Freigabe der Durchtrittsöffnung 8 für das Dach 2 bewirkt werden. Damit diese Bewegung nicht mit einer Freigabe der Aufnahmeöffnung 10 für Gepäck überlappt bzw. damit bei Ausführung der einen Bewegung die andere gesperrt ist, sind Steuerungsmechanismen erforderlich. Wenn eine heckseitige Scharniervorrichtung 26, mit der der heckwärtige Bereich 9 des Deckelteils 6 an der Fahrzeugkarosserie schwenkbar festlegbar ist, eingerastet ist, wird durch die Kraftausübung mittels des Antriebsorgans 11 auf den Zwischenlenker 24 eine Kraft ausgeübt, die eine aufwärts gerichtete Komponente enthält. Dadurch wird im Doppelscharnier 25, das den Zwischenlenker 24, der im Ausführungsbeispiel einstückig mit dem unteren Lenker 14 des Viergelenks 12 verbunden ist, eine zurückhaltende Kraft auf den Lenker 20 ausgeübt, da die Anlenkung des Lenkers 24 und des Lenkers 20 im Scharnier 25 voneinander beabstandet sind und sich der Winkel α zwischen den Lenkern 20 und 24 verringert. Durch die Zugkraft auf den Lenker 20 wird der Zapfen 19 in der Kulisse 17 ebenfalls abwärts gezogen und stößt dadurch am äußeren Endbereich des geradlinigen Bereichs des Kulisse 17 an. Dadurch wird eine Zugkraft auf das Teil 13 des Viergelenks ausgeübt. Durch diese Zugkraft werden die Teile 13,14,15 und 16 des Viergelenks in einer Parallelstellung gehalten, so daß sich während der Freigabe der Durchtrittsöffnung 8 für das Dach 2 eine gegensinnige Aufschwenkung des Deckelteils 6 im Sinne einer Freigabe der Aufnahmeöffnung 10 für Gepäck nicht einstellen kann.

Wenn im Ausführungsbeispiel die gegensinnige Öffnung zur Freigabe der Aufnahmeöffnung für Gepäck bewirkt werden soll (Fig. 5), wird der Scharnierbereich 26 entriegelt, mittels einer Gasdruckfeder oder eines anderen unterstützenden Organs (nicht eingezeichnet) kann dann das Mehrgelenk 12 gegeneinander geöffnet werden. Das Antriebsorgan 11 bleibt hierbei in Ruhestellung, die es auch bei geschlossenem Deckelteil 6 innehat. Durch die Aufschwenkbewegung greift in dieser Stellung der Zapfen 19 in der Kulisse 17 in den gekrümmten Endbereich ein und wird in diesem so weit verfahren, bis er in der geöffneten Stellung am vorderen Endbereich der Kulisse 17 anschlägt (Fig. 5). Dadurch wird das Aufschwenken des Deckelteils 6 begrenzt, so daß eine weitere Anschlagsicherung oder dergleichen nicht erforderlich ist.

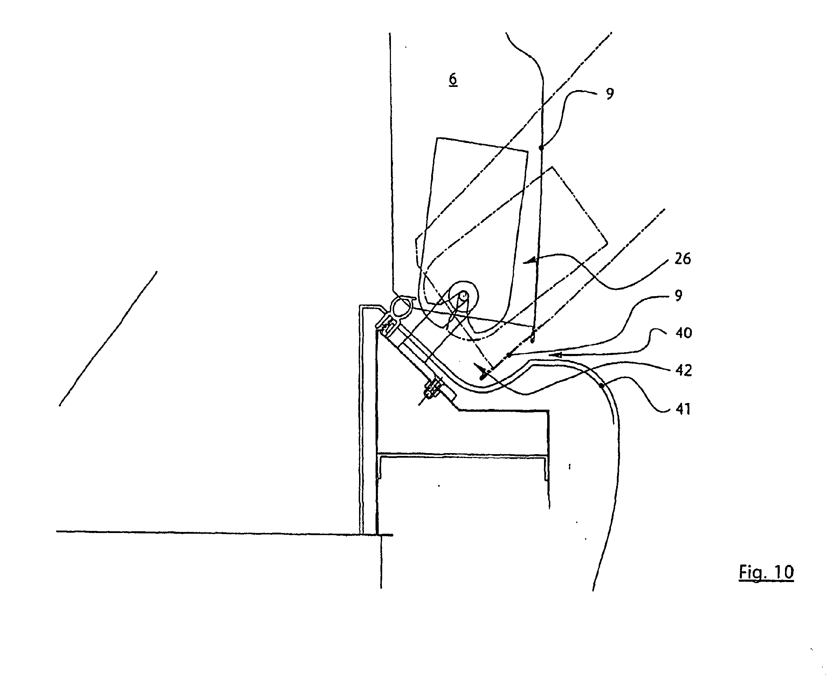

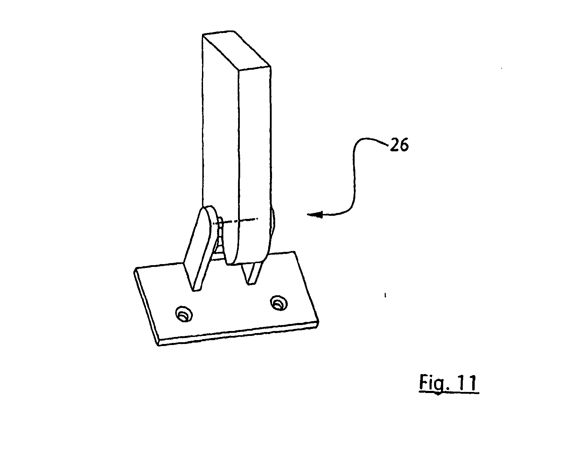

Wie in den Fig. 10 und 11 zu erkennen ist, ist eine Ausnehmung 40 zwischen einem insbesondere als Stoßstange ausgebildeten Karosserieteil 41, das sich heckseitig an den hinteren Endbereich 9 des Verdeckkastendeckels 6 anschließt und dem Verdeckkastendeckel 6 ausgebildet. Die Fuge kann besonders klein gehalten werden, wenn die Drehachse innerhalb einer Ausnehmung 42 angeordnet ist, die in den oberen Bereich der Stoßstange 41 eingelassen ist und bei geschlossem Deckelteil 6 optisch nicht erkennbar ist. Das Scharnier 26 dient dabei gleichzeitig als Schloß für das Deckelteil 6.

## Patentansprüche

1. Cabriolet-Fahrzeug (1) mit einem im rückwärtigen Fahrzeugbereich (3) unterhalb eines Deckelteils (6) ablegbaren Dach (2), wobei das Deckelteil (6) einerseits zur Freigabe einer seinem vorderen Endbereich (7) benachbarten Durchtrittsöffnung (8) für das Dach (2) und andererseits zur Freigabe einer seinem hinteren Endbereich (9) benachbarten Aufnahmeöffnung (10) für Gepäck auf- und zubeweglich ist, wobei je nach Öffnungszustand des Deckelteils verschiedene Teile (13; 14; 15;16) einer die Bewegung des Deckelteils führenden, insbesondere Lenker, Gestängeteile und Scharnierteile o.dgl. aufweisenden Mehrgelenkanordnung (12) in unterschiedlicher Stellung relativ zueinander stehen und wobei für das Öffnen und Schließen des Deckelteils (8) ein vorzugsweise als Hydraulikzylinder ausgebildeter Antrieb (11) vorgesehen ist, **dadurch gekennzeichnet, daß** zur Sicherung einer die Freigabe der Aufnahmeöffnung für Gepäck verhindernde Stellung der Teile (13,14,15,16) der Mehrgelenkanordnung (12) zueinander eine Führungskulisse (18) sowie eine in diese eingreifende, einen Zapfen (19) aufweisende Zwangsführung vorgesehen ist, wobei der Zapfen (19) in der die Freigabe der Aufnahmeöffnung für Gepäck verhindernden Stellung und in der die Durchtrittsöffnung für das Dach (2) verschließenden Stellung in einer Zwischenstellung innerhalb der Führungskulisse (18) positioniert ist und wobei der Antrieb (11) mit einem integrierten Verriegelungselement zur verriegelten Halterung des Deckelteils (6) in seiner Durchtrittsöffnung (8) für das Dach verschließenden Stellung versehen ist.

2. Cabriolet-Fahrzeug nach Anspruch 1, **dadurch gekennzeichnet, daß** die Zwangsführung (17) an Teilen eines Viergelenks (12) angeordnet ist, welches dem vorderen Bereich (7) des Deckelteils (6) zugeordnet ist, und daß dessen Teile (13; 14; 15; 16) bei geschlossenem Dekkelteil (6) sowie bei Freigabe der Durchtrittsöffnung (8) zur Aufnahme des Daches (2) eine im wesentlichen parallele Stellung zueinander einnehmen.

3. Cabriolet-Fahrzeug nach einem der Ansprüche 1 bis 2, **dadurch gekennzeichnet, daß** in die Führungskulisse (18) der Zwangsführung (17) der Zapfen (19) beweglich geführt ist.

4. Cabriolet-Fahrzeug nach Anspruch 3, **dadurch gekennzeichnet, daß** bei Parallelstellung der Teile (13; 14; 15; 16) des Viergelenkes (12) der Zapfen (19) in der Führungskulisse (18) in einer Zwischenstellung gehalten ist.

5. Cabriolet-Fahrzeug nach Anspruch 3 oder 4, **dadurch gekennzeichnet, daß** bei Freigabe der Aufnahmeöffnung (10) für Gepäck der Zapfen (19) in der Führungskulisse (18) an einem Endbereich anstößt und bei Freigabe der Durchtrittsöffnung (8) für das Dach (2) am anderen Endbereich.

6. Cabriolet-Fahrzeug nach einem der Ansprüche 2 bis 5, **dadurch gekennzeichnet, daß** bei Freigabe der Aufnahmeöffnung (10) für Gepäck das Viergelenk (12) in einer maximal geöffneten Stellung der Teile (13; 14; 15; 16) zueinander gehalten ist.

7. Cabriolet-Fahrzeug nach einem der Ansprüche 3 bis 6, **dadurch gekennzeichnet, daß** für die Führung des Zapfens (19) an der Führungskulisse (18) ein Gestänge (20; 21; 22) vorgesehen ist, das mehrgelenkig ausgebildet ist und an seinem dem Zapfen (19) abgewandten Ende (23) karosserieseitig gelagert ist.

8. Cabriolet-Fahrzeug nach einem der Ansprüche 3 bis 7, **dadurch gekennzeichnet, daß** die Führungskulisse (18) sich im wesentlichen in Fahrzeuglängsrichtung erstreckt und einen geradlinigen sowie einen daran sich anschließenden gekrümmten Bereich aufweist.

9. Cabriolet-Fahrzeug nach einem der Ansprüche 3 bis 8, **dadurch gekennzeichnet, daß** ein Viergelenk (12) jeweils beidseits einer vertikalen Längsmittelebene im Fahrzeug angeordnet ist und dem Viergelenk (12) eine Führungskulisse (18) sowie ein Gestänge (20; 21; 22) zur Führung des Zapfens (19) in der Führungskulisse (18) zugeordnet ist.

10. Cabriolet-Fahrzeug nach einem der Ansprüche 1 bis 9, **dadurch gekennzeichnet, daß** als Verriegelungselement in dem als Hydraulikzylinder ausgebildeten Antrieb (11) ein mechanisches Verriegelungselement vorgesehen ist.

11. Cabriolet-Fahrzeug nach einem der Ansprüche 1 bis 10, **dadurch gekennzeichnet, daß** zur Freigabe der dem hinteren Endbereich (9) benachbarten Aufnahmeöffnung (10) für Gepäck ein entriegelbares Scharnier (26) vorgesehen und eine als Gasdruckfeder ausgebildetes unterstützendes Organ für die Aufschwenkbewegung des Deckels (6) vorgesehen ist.

## Claims

1. Convertible vehicle (1), having a roof (2) able to be stowed in the rear part (3) of the vehicle underneath a cover member (6), the cover member (6) being movable to open and close, on the one hand to uncover an opening (8) adjacent its front end-region (7) for the roof (2) to pass through and on the other hand to uncover a receiving opening (10) for luggage adjacent its rear end-region (9), wherein different parts (13; 14; 15; 16) of a multiple link arrangement (12) which guides the movement of the cover member and has in particular directing arms, linkage members and hinge members or the like are in different positions relative to one another depending on the state of opening of the cover member, and wherein an actuator (11), preferably in the form of a hydraulic cylinder, is provided for the opening and closing of the cover member (8), **characterised in that**, to hold the parts (13, 14, 15, 16) of the multiple link arrangement (12) secure in a position relative to one another in which the uncovering of the receiving opening for luggage is prevented, a guiding slot (18) is provided together with a means of positive guidance which engages in the guiding slot (18) and has a pin (19), the pin (19) being positioned in an intermediate position inside the guiding slot (18) in the position in which the uncovering of the receiving opening for luggage is prevented and in the position in which the opening for the roof (2) to pass through is closed off, and the actuator (11) being provided with an integral locking member to hold the cover member (6) locked in the position in which the latter closes off the opening (8) for the roof to pass through.

2. Convertible vehicle according to claim 1, **characterised in that** the means of positive guidance (17) is arranged on parts of a four-bar linkage (12) which is associated with the front region (7) of the cover member (6), and **in that** parts (13; 14; 15; 16) of the said linkage (12) assume positions in which they are substantially parallel to one another when the cover member (6) is closed and when the opening (8) for passage through to receive the roof (2) is uncovered.

3. Convertible vehicle according to either of claims 1 and 2, **characterised in that** the pin (19) is movably guided into the guiding slot (18) of the means of positive guidance (17).

4. Convertible vehicle according to claim 3, **characterised in that**, when the parts (13; 14; 15; 16) of the four-bar linkage (12) are in a parallel position, the pin (19) is held in an intermediate position in the guiding slot (18).

5. Convertible vehicle according to claim 3 or 4, **characterised in that**, when the receiving opening (10) for luggage is uncovered, the pin (19) butts, in the guiding slot (18), against one end region and when the opening (8) for the roof (2) to pass through is uncovered it butts against the other end region.

6. Convertible vehicle according to one of claims 2 to 5, **characterised in that**, when the receiving opening (10) for luggage is uncovered, the four-bar linkage (12) is held in a position in which the parts (13; 14; 15; 16) are opened to a maximum degree relative to one another.

7. Convertible vehicle according to one of claims 3 to 6, **characterised in that**, to guide the pin (19), there is provided at the guiding slot (18) a linkage (20; 21; 22) which is of a multiple link form and which, at its end (23) remote from the pin (19), has a mounting associated with the bodywork.

8. Convertible vehicle according to one of claims 3 to 7, **characterised in that** the guiding slot (18) extends substantially in the longitudinal direction of the vehicle and has a straight region, and a curved region which connects up with the latter.

9. Convertible vehicle according to one of claims 3 to 8, **characterised in that** a four-bar linkage (12) is arranged in the vehicle on each of the two sides of a vertical longitudinal centre plane, and each four-bar linkage (12) has associated with it a guiding slot (18) and a linkage (20; 21; 22) to guide the pin (19) in the guiding slot (18).

10. Convertible vehicle according to one of claims 1 to 9, **characterised in that** a mechanical locking member is provided as a locking member in the actuator (11) in the form of a hydraulic cylinder.

11. Convertible vehicle according to one of claims 1 to 10, **characterised in that** an unlockable hinge (26) is provided to allow the receiving opening (10) for luggage situated adjacent the rear end-region (9) to be uncovered, and a supporting member in the form of a pneumatic strut is provided for the pivoting-open movement of the cover (6).

## Revendications

1. Véhicule décapotable (1) comportant un toit (2) rétractable dans la zone arrière du véhicule (3) en dessous d'un capot (6), le capot (6) étant mobile pour s'ouvrir et se fermer, d'une part pour libérer une ouverture de passage (8) pour le toit (2) voisine de sa zone d'extrémité avant (7) et d'autre part pour libérer une zone de logement (10) pour les bagages voisine de sa zone d'extrémité arrière (9), différentes pièces (13 ; 14 ; 15 ; 16) d'un ensemble à plusieurs articulations (12) guidant le mouvement du capot et présentant en particulier des bielles, des pièces de bielle et des pièces de charnière ou analogues, se trouvant dans une position différente les unes par rapport aux autres selon l'état d'ouverture du capot avec un entraînement (11), de préférence en forme de vérin hydraulique, prévu pour l'ouverture et la fermeture du capot (8),
**caractérisé en ce que**
pour le blocage d'une position des pièces (13, 14, 15, 16) de l'ensemble à plusieurs articulations (12) les unes par rapport aux autres afin d'empêcher la libération de l'ouverture de logement pour les bagages, il est prévu une coulisse de guidage (18) ainsi qu'une glissière forcée s'engrenant dans celle-ci et présentant un tenon (19), le tenon (19) dans la position empêchant la libération de l'ouverture de logement pour les bagages et dans la position fermant l'ouverture de passage pour le toit (2), est positionné dans une position intermédiaire à l'intérieur de la coulisse de guidage (18), et l'entraînement (11) est pourvu d'un élément de verrouillage intégré permettant le maintien verrouillé du capot (6) dans sa position fermant l'ouverture de passage (8) pour le toit (2).

2. Véhicule décapotable selon la revendication 1,
**caractérisé en ce que**
la glissière forcée (17) est disposée au niveau de pièces d'un ensemble à quatre articulations (12), qui est associé à la zone avant (7) du capot (6), et ses pièces (13 ; 14 ; 15 ; 16), lorsque le capot (6) est fermé et lors de la libération de l'ouverture de passage (8) pour le logement du toit (2), adoptent une position pour l'essentiel parallèle les unes par rapport aux autres.

3. Véhicule décapotable selon l'une des revendications 1 à 2,
**caractérisé en ce que**
le tenon (19) est guidé de façon mobile dans la coulisse de guidage (18) de la glissière forcée (17).

4. Véhicule décapotable selon la revendication 3,
**caractérisé en ce que**
4lors d'une position parallèle des pièces (13 ; 14 ; 15 ; 16) de l'ensemble à quatre articulations (12), le tenon (19) est maintenu dans la coulisse de guidage (18) dans une position intermédiaire.

5. Véhicule décapotable selon la revendication 3 ou 4,
**caractérisé en ce que**
lors de la libération de l'ouverture de logement (10) pour les bagages, le tenon (19) vient buter dans la coulisse de guidage (18) contre une zone d'extrémité et lors de la libération de l'ouverture de passage (8) pour le toit (2), il vient buter contre l'autre zone d'extrémité.

6. Véhicule décapotable selon l'une des revendications 2 à 5,
**caractérisé en ce que**
lors de la libération de l'ouverture de logement (10) pour les bagages, l'ensemble à quatre articulations (12 ; 112) est maintenu dans une position ouverte maximale des pièces (13 ; 14 ; 15 ; 16; 113 ; 114 ; 115 ; 116) les unes par rapport aux autres.

7. Véhicule décapotable selon l'une des revendications 3 à 6,
**caractérisé en ce que**
pour le guidage du tenon (19) au niveau de la coulisse de guidage (18), il est prévu une bielle (20 ; 21 ; 22) configurée à plusieurs articulations et logée, au niveau de son extrémité (23) opposée au tenon (19), du côté de la carrosserie.

8. Véhicule décapotable selon l'une des revendications 3 à 7,
**caractérisé en ce que**
la coulisse de guidage (18) s'étend pour l'essentiel dans la direction longitudinale du véhicule et présente une zone rectiligne ainsi qu'une zone courbée s'y rattachant.

9. Véhicule décapotable selon l'une des revendications 3 à 8,
**caractérisé en ce qu'**
un ensemble à quatre articulations (12) est disposé respectivement des deux côtés d'un plan médian longitudinal vertical dans le véhicule et l'ensemble à quatre articulations (12) est associé à une coulisse de guidage (18) ainsi qu'à une bielle (20 ; 21 ; 22) pour le guidage du tenon (19) dans la coulisse de guidage (18).

10. Véhicule décapotable selon l'une des revendications 1 à 9,
**caractérisé en ce qu'**
un élément de verrouillage mécanique est prévu en tant qu'élément de verrouillage dans l'entraînement (11) en forme de vérin hydraulique.

11. Véhicule décapotable selon l'une des revendications 1 à 10,
**caractérisé en ce que**
pour libérer l'ouverture de logement (10) pour les bagages voisine de la zone d'extrémité arrière (9), une charnière (26) peut être déverrouillée, avec un élément d'assistance en forme de ressort à gaz pour le mouvement de pivotement du capot (6).
